Europäisches Patentamt

**European Patent Office**

Office européen des brevets

(11) Numéro de publication: **0 094 325**
**A1**

(12) **DEMANDE DE BREVET EUROPEEN**

(21) Numéro de dépôt: **83400969.8**

(22) Date de dépôt: **11.05.83**

(51) Int. Cl.³: **F 16 L 1/04, E 02 D 27/50**

(30) Priorité: **12.05.82 FR 8208220**

(43) Date de publication de la demande: **16.11.83**
**Bulletin 83/46**

(84) Etats contractants désignés: **AT BE CH DE FR GB IT LI LU NL SE**

(71) Demandeur: **CREUSOT-LOIRE, 42 rue d'Anjou, F-75008 Paris (FR)**
Demandeur: **SPIE OFFSHORE, Route d'Ollioules Quartier des Prats, F-83110 Sanary-sur-Mer (FR)**

(72) Inventeur: **Roellens, Jean-Marie, 1039 Chemin de Pierre dou Le Brusc, F-83140 Sixfours (FR)**
Inventeur: **Joyeux, Alain, Saint Symphorien de Marmagne, F-71710 Montcenis (FR)**

(74) Mandataire: **Pinchon, Odile et al, CREUSOT-LOIRE 15 rue Pasquier, F-75383 Paris Cedex 08 (FR)**

(54) **Collier de fixation pour canalisation sous-marine.**

(57) Le collier de fixation (5) propre à l'invention permet de fixer rigidement une canalisation (1) sur des éléments ancrés (3, 4) dans le sol marin (2). Le collier est constitué d'une pièce unique (5) réalisée essentiellement en matière synthétique. Les colliers comportent des flancs évasés de façon à pouvoir être empilés les uns sur les autres pendant leur stockage et leur transport.

Application à la fixation de canalisations sous-marines destinées par exemple au transport d'hydrocarbures.

0094325

Collier de fixation pour canalisation sous-marine

La présente invention concerne les colliers de fixation destinés à maintenir en place les canalisations sous-marines.

Les canalisations sous-marines, appelées communément "pipelines" reposent généralement sur le fond de la mer et sont reliées rigidement à des éléments fixes ancrés sur le sol marin. Il est nécessaire d'attacher assez solidement ces canalisations sur le fond de la mer pour éviter qu'elles ne remontent sous l'effet de la poussée d'Archimède lorsqu'elles sont vides ou pour résister à tous autres efforts tels, par exemple, que les efforts de houle.

Jusqu'à présent, la fixation des canalisations au fond de la mer a été effectuée au moyen de colliers de fixation métalliques.

Toutefois, ces colliers présentent un certain nombre d'inconvénients : ils sont de poids élevé, constitués de plusieurs pièces difficiles à assembler entourant complètement la canalisation et donc d'un prix de revient élevé. Comme ils sont exposés à la corrosion, ils doivent être peints, ce qui augmente encore leur prix de revient à la fabrication ou durant l'exploitation et rend plus difficile leur manipulation, le revêtement étant assez fragile. En outre, pour pallier les inconvénients du phénomène d'électrolyse de l'eau de mer qui se produit inévitablement quand les colliers métalliques sont en place, on doit prévoir des anodes sacrificielles qui permettent de maintenir intact le métal des colliers. La fixation des canalisations au moyen de colliers métalliques est une opération délicate qui doit être effectuée par des plongeurs. Une telle opération est longue et difficile car, étant lourds, munis d'anodes relativement encombrantes, et revêtus d'un revêtement contre la corrosion assez fragile, les colliers doivent être transportés un par un par les plongeurs. En manipulant les colliers un par un, on protège non seulement les colliers eux-mêmes, mais aussi les plongeurs pour lesquels une blessure peut avoir des conséquences très graves, puisqu'un plongeur blessé ne peut pas remonter rapidement à la surface en raison des paliers de décompression à respecter. Par ailleurs, les colliers métalliques manquent de souplesse, ce qui présente des inconvénients lors de la fixation de ceux-ci au sol marin, si cette fixation est effectuée par exemple par explosif ; de plus, si la canalisation est enrobée de béton, dont la surface est souvent irrégulière, ces colliers ne peuvent pas s'adapter exactement à la forme de la canalisation.

La présente invention tente de remédier aux inconvénients précités.

Plus particulièrement, l'invention concerne un collier de fixation pour canalisation sous-marine permettant d'établir une liaison rigide entre la canalisation et des éléments fixes ancrés dans le sol marin, constitué d'une pièce unique comprenant une zone centrale qui vient entourer la canalisation sur environ une demi-circonférence, et deux zones latérales planes qui viennent se fixer sur deux éléments fixes ancrés dans le sol marin.

Selon l'invention, le collier est réalisé essentiellement en une matière synthétique. Il comporte en outre quatre parois latérales planes qui relient chaque bord latéral des zones latérales planes avec au moins une partie du bord latéral de la zone centrale. Ces quatre parois sont inclinées de façon à présenter des faces allant en s'évasant vers le haut, de façon que plusieurs colliers de fixation identiques puissent être empilés les uns sur les autres par gerbage.

De préférence, le collier est réalisé en une matière synthétique renforcée au moyen d'un matériau sous forme de fibres.

Le collier peut également être réalisé en une matière synthétique renforcée au moyen d'une armature métallique.

Afin d'être mieux comprise, l'invention va être décrite au moyen de deux modes de réalisation, donnés uniquement à titre d'exemples, en référence aux dessins annexés.

La figure 1 représente en coupe transversale l'ensemble du dispositif de fixation d'une canalisation comprenant un collier conforme à la présente invention.

La figure 2 représente le collier seul en coupe selon B-B.

La figure 3 représente ce même collier en vue de dessus.

La figure 4 représente ce collier en coupe selon A-A.

La figure 5 représente en coupe transversale une variante de réalisation du dispositif de fixation.

La figure 6 est une coupe selon C-C de la figure 5.

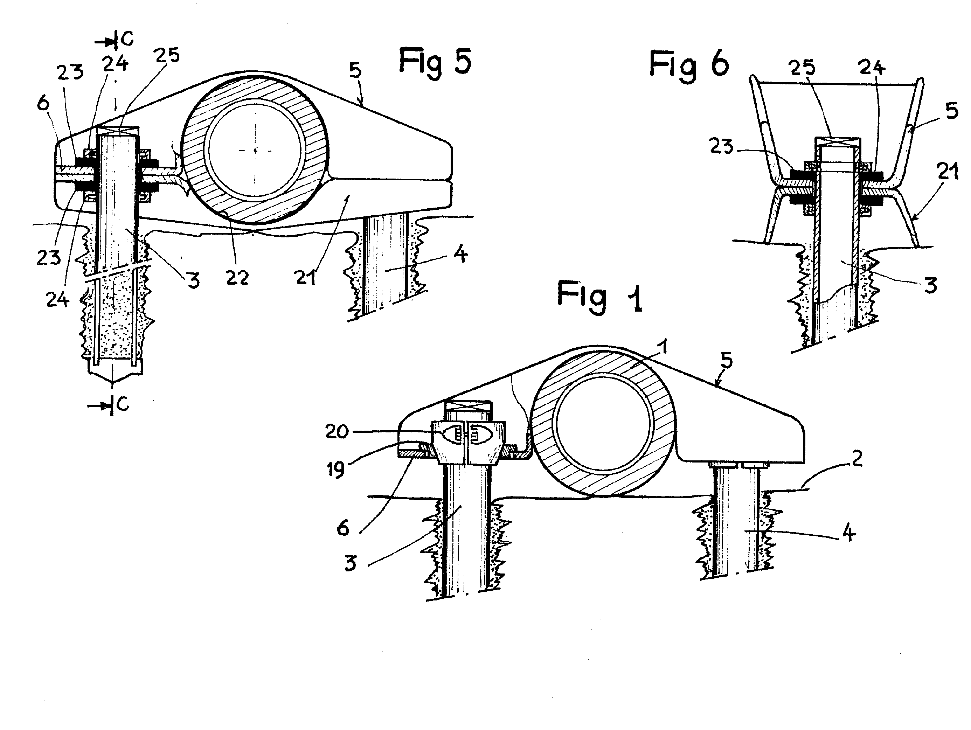

En se reportant à la figure 1, on distingue une canalisation 1 reposant sur le fond de la mer 2. De part et d'autre de cette canalisation, sont disposés verticalement deux pieux 3, 4, scellés dans le sol. Le collier de fixation 5 vient coiffer la partie supérieure de la canalisation 1 et comprend des parties latérales 6 qui sont fixées rigidement, chacune, aux pieux 3 et 4.

Ce collier 5 est réalisé en une seule pièce en matière synthétique. Cette matière synthétique est avantageusement renforcée par exemple au moyen de fibres de verre, de carbone ou de bois ou au moyen d'une âme d'acier. Le collier 5 est donc, d'une part, inaltérable à l'eau de mer, et, d'autre part, de densité relativement faible et par conséquent de poids apparent dans l'eau extrêmement faible. On conçoit alors aisément que la manutention dans l'eau d'un collier réalisé ainsi en matière synthétique est beaucoup plus commode et moins dangereuse. On peut remarquer aussi qu'un tel collier 5 réalisé en matière synthétique diminue aussi le risque de blessures par coupure, parce que, indépendamment du poids, un objet en matière synthétique présente des arêtes moins tranchantes qu'un objet métallique de forme identique.

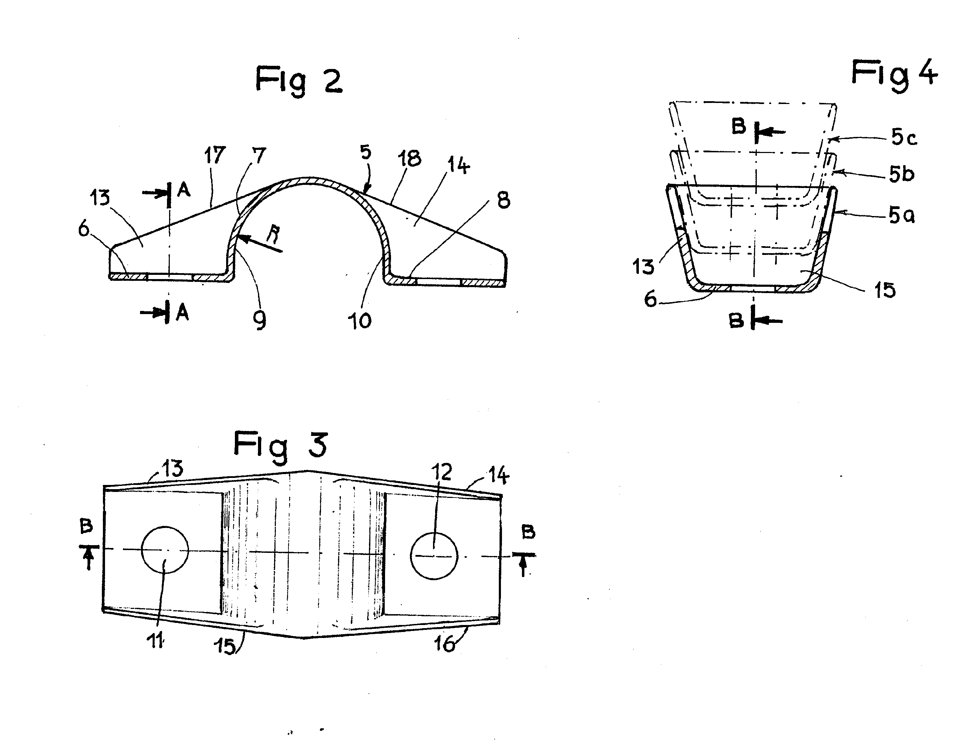

La forme particulière du collier 5 présente dans cet exemple de réalisation est particulièrement visible sur les figures 2, 3 et 4. En se reportant à la figure 2, on distingue donc le collier 5 qui est réalisé en une seule pièce en matière synthétique. Ce collier est constitué d'une première zone centrale 7 qui a la forme générale d'une bande incurvée en demi cercle de rayon R sensiblement égal au rayon de la canalisation 1. Ce collier 5 comprend d'autre part deux zones latérales 6, 8, ayant la forme de bandes planes reliées respectivement à l'une et l'autre des extrémités 9, 10 de la zone centrale 7. Ces bandes planes 6, 8 sont disposées radialement par rapport à la zone centrale 7 circulaire, et comprennent chacune un orifice 11, 12 permettant l'emboitement du collier 5 sur les éléments fixes 3, 4 (figure 1).

Ce collier 5 comprend en outre quatre parois latérales planes 13, 14, 15, 16. Ces parois latérales relient chaque bord latéral des zones latérales 6, 8 avec une partie du bord latéral de la zone centrale 7. Dans cet exemple de réalisation, le bord supérieur 17, 18 de chaque paroi latérale suit une ligne droite tangente à la zone centrale 7 de forme cylindrique.

Comme on le distingue plus particulièrement en figure 4, les bords latéraux 13, 14, 15, 16 sont inclinés de façon à présenter des faces allant en s'évasant vers le haut. De cette manière, on peut empiler les uns sur les autres, par gerbage, différents colliers de forme identique 5a, 5b ... etc. Pour que l'empilement des colliers s'effectue correctement, il est nécessaire que l'ensemble des surfaces des colliers présentent des angles de dépouille suffisants. Cet empilement permet d'améliorer le stockage et le transport des colliers.

Lors de sa fabrication, le collier 5 peut être réalisé de différentes couleurs en introduisant une teinture dans la résine destinée à cons-

4

tituer la matière synthétique du collier. Cette façon de teindre l'objet est, bien entendu, connue en soi. Cependant, dans cette application particulière à la fixation des canalisations sous-marines, cela présente un avantage parce que l'on peut jouer sur les différences de couleurs des colliers pour repérer les différentes canalisations sous-marines installées. Le fait que le collier soit teint dans la masse, au lieu d'être peint, accroît nettement le temps durant lequel le collier immergé garde une couleur identifiable.

En se reportant à la figure 1, on peut décrire maintenant un exemple de réalisation d'un dispositif de fixation utilisant principalement un collier 5 monté sur des pieux 3 et 4. La canalisation 1 reposant sur le fond de la mer, on vient simplement disposer par dessus le collier 5 dont les parois latérales 6, 8 viennent s'enfiler sur les extrémités supérieures des pieux 3 et 4 par les orifices 11, 12. On dispose au-dessus des parois latérales 6, 8 des embases 19, de préférence métalliques, puis on dispose un collier de fixation 20, de préférence métallique, venant se bloquer à l'aide de tout moyen approprié sur les extrémités supérieures respectives des pieux 3 et 4.

Le fait qu'il n'y ait aucune partie du collier qui vienne s'appliquer sur la partie inférieure de la canalisation 1 simplifie considérablement le montage des colliers de fixation. Par ailleurs, le fait que le collier soit réalisé en matière synthétique permet une réalisation de ce collier avec des épaisseurs variables en tout point, ce qui confère à l'ensemble une bonne résistance mécanique avec un poids minimum et un prix de revient minimum.

Selon un mode de réalisation particulier de l'invention, illustré par les figures 5 et 6, il est prévu un collier secondaire 21 monté sur les pieux 3 avant la pose de la canalisation 1. La canalisation repose ainsi sur des colliers et non directement sur le fond marin 2. Ce dispositif de fixation est, de ce fait, légèrement plus compliqué et onéreux, mais peut être préférable pour éviter tout endommagement de la canalisation et garantir son support correct quels que soient les accidents de terrain. Dans ce mode de réalisation, le collier supérieur 5 est identique à celui décrit dans le premier exemple de réalisation, et le collier secondaire 21 peut présenter une forme tout à fait semblable à celle du collier 5. En particulier, le collier 21 peut présenter une forme permettant le gerbage et peut être réalisé en un matériau synthétique. Le collier 21 inférieur étant généralement moins sollicité que le collier 5 supérieur, il peut être de constitution plus légère, et sa face cylindrique 22 en appui sur la canalisation peut s'étendre sur une portion de circonférence plus faible que celle de la face correspondante du collier 5 supérieur.

La fixation des colliers 5, 21 sur les pieux 3 peut être réalisée à l'aide de bagues 24 enfilées sur le pieu de part et d'autre des parois latérales 6 des colliers, ces bagues 24 étant fixées rigidement sur les pieux. Il est préférable d'interposer une embase 23, en forme de rondelle plane, entre les colliers et les bagues de fixation 24. On peut aussi prévoir une protection cathodique 25 sur le sommet de chaque pieu pour éviter toute oxydation des éléments de fixation des colliers.

L'invention ne se limite pas aux modes de réalisation qui viennent d'être décrits, elle en comporte au contraire toutes les variantes de réalisation et peut s'étendre aux moyens équivalents, entrant dans le cadre des revendications annexées.

## REVENDICATIONS

1. Collier de fixation pour canalisation sous-marine permettant d'établir une liaison rigide entre la canalisation et des éléments fixes ancrés dans le sol marin, constitué d'une pièce unique comprenant une zone centrale qui vient entourer la canalisation sur environ une demi-circonférence, et deux zones latérales qui viennent se fixer sur deux éléments fixes ancrés dans le sol marin, caractérisé par le fait qu'il est réalisé essentiellement en une matière synthétique et qu'il comporte en outre quatre parois latérales planes (13, 14, 15, 16) qui relient chaque bord latéral des zones latérales planes (6,8) avec au moins une partie du bord latéral de la zone centrale (7) et qui sont inclinées de façon à présenter des faces allant en s'évasant vers le haut, de façon que plusieurs colliers de fixation identiques puissent être empilés les uns sur les autres par gerbage.

2. Collier de fixation pour canalisation sous-marine, selon la revendication 1, caractérisé par le fait qu'il est réalisé en une matière synthétique renforcée au moyen d'un matériau sous forme de fibres.

3. Collier de fixation pour canalisation sous-marine, selon la revendication 1, caractérisé par le fait qu'il est réalisé en une matière synthétique renforcée au moyen d'une armature métallique.

4. Collier de fixation pour canalisation sous-marine, selon l'une quelconque des revendications précédentes, caractérisé par le fait qu'il est destiné à être placé au-dessus de la canalisation sous-marine (1) reposant sur le fond marin (2).

5. Collier de fixation selon l'une quelconque des revendications précédentes, caractérisé par le fait qu'il est destiné à être placé au-dessous de la canalisation sous-marine (1).

Fig 5

Fig 6

Fig 1

1/2

0094325

## Fig 2

## Fig 4

## Fig 3

2/2

0094325

**Office européen**
**des brevets**

## RAPPORT DE RECHERCHE EUROPEENNE

Numéro de la demande

EP  83 40 0969

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. ³) |
| A | FR-A-2 455 654  (INTERNATIONAL ANCHORING AND CONTRACTING CO.) * Page 2, lignes 19-26; revendication 13; figures 10,14,21 * --- | 1,2,4, 5 | F 16 L  1/04 E 02 D  27/50 |
| A | US-A-3 185 420  (STEWART) * Colonne 2, lignes 6-17, 63-66; figures 2,3 * --- | 1,4,5 | |
| A | EP-A-0 018 898  (TISSIER) * Figures 4,6 * --- | 1,4,5 | |
| A | EP-A-0 020 232  (COUR) * Figures 15,17 * ----- | 1,4,5 | DOMAINES TECHNIQUES RECHERCHES (Int. Cl. ³) F 16 L E 02 D |

Le présent rapport de recherche a été établi pour toutes les revendications

| Lieu de la recherche | Date d'achèvement de la recherche | Examinateur |
|---|---|---|
| LA HAYE | 11-07-1983 | ANGIUS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

   & : membre de la même famille, document correspondant

OEB Form 1503 03.82